# EUROPEAN PATENT APPLICATION

(11) **EP 4 604 437 A1**
(43) Date of publication of application: **20.08.2025**
(21) Application number: 23893689.2
(22) Date of filing: 15.11.2023
(51) Int. Cl.: H04L 5/00, H04W 76/15

(54) **COMMUNICATION METHOD, COMMUNICATION DEVICE, AND COMMUNICATION SYSTEM**

(30) Priority: 26.11.2022 CN 202211495242; 30.01.2023 CN 202310107520
(71) Applicant: Huawei Technologies Co., Ltd., Shenzhen, Guangdong 518129 (CN)
(72) Inventor: RUAN, Wei, Shenzhen, Guangdong 518129 (CN); MA, Yunsi, Shenzhen, Guangdong 518129 (CN)
(74) Representative: Pfenning, Meinig & Partner mbB
(86) International application number: PCT/CN2023/131676
(87) International publication number: WO 2024/109599

(57) **Abstract**

This application provides a communication method, a communication apparatus, and a communication system. According to this method, a manner of cooperative communication between a plurality of access point devices is constructed. To be specific, one non-access point multi-link device may be connected to two or more access point devices (for example, connected to two access point multi-link devices, or connected to one access point multi-link device and one access point device) simultaneously. Therefore, the plurality of access point devices may provide, in same time, network services for the non-access point multi-link device simultaneously, so that communication reliability and a communication throughput can be improved.

## Description

This application claims priority to Chinese Patent Application No. 202211495242.3, filed with the China National Intellectual Property Administration on November 26, 2022 and entitled "COMMUNICATION METHOD, COMMUNICATION APPARATUS, AND COMMUNICATION SYSTEM", which is incorporated herein by reference in its entirety.

This application claims priority to Chinese Patent Application No. 202310107520.1, filed with the China National Intellectual Property Administration on January 30, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

An access point (access point, AP) device may provide a network service within specific coverage, so that a terminal device may access a network and perform communication through the AP device. For example, in an indoor scenario, a plurality of AP devices may be deployed, each AP device covers a specific range, and the plurality of AP devices jointly cover entire indoor space.

When the terminal device moves, the AP device that provides a network service for the terminal device may be handed over accordingly, so that continuous network services can be provided for the terminal device.

As communication technologies develop, a user has increasingly high requirements on communication reliability and a communication throughput. In the foregoing application scenario, how to improve the communication reliability and the communication throughput needs to be resolved.

### SUMMARY

Embodiments of this application provide a communication method, a communication apparatus, and a communication system, to improve communication reliability and a communication throughput.

According to a first aspect, an embodiment of this application provides a communication method. The method may be performed by a first device or a module (for example, a chip) used in the first device. That the first device performs the method is used as an example. The first device establishes a multi-link connection to a second device by using a first link set, and establishes at least one link connection to a third device by using a second link set; the first device sends first data to the second device by using the first link set; and the first device sends second data to the third device by using the second link set, where the second data is forwarded by the third device to the second device by using a third link set; and the first device is a non-access point multi-link device, the second device is an access point multi-link device, and the third device is an access point multi-link device or an access point device.

In the foregoing solution, a manner of cooperative communication between a plurality of access point devices is constructed. To be specific, one non-access point multi-link device may be connected to two or more access point devices (for example, connected to two access point multi-link devices, or connected to one access point multi-link device and one access point device) simultaneously. Therefore, the plurality of access point devices may provide, in same time, network services for the non-access point multi-link device simultaneously, so that communication reliability and a communication throughput can be improved.

In a possible implementation method, the first device sends identification information of at least one candidate device to the second device, where the at least one candidate device supports a multi-link operation MLO function; and the first device receives notification information from the second device, where the notification information includes identification information of the third device, the third device is included in the at least one candidate device, and the notification information indicates to use the third device as a secondary access point multi-link device.

In the foregoing solution, the second device selects the third device from the at least one candidate device as the secondary access point multi-link device, so that the secondary access point multi-link device can be determined more accurately.

In a possible implementation method, the at least one candidate device meets one or more of the following conditions:
signal strength of the at least one candidate device is greater than signal strength of the second device;
the signal strength of the at least one candidate device is greater than a signal strength threshold;
load of the at least one candidate device is less than load of the second device; and
the load of the at least one candidate device is less than a load threshold.

In the foregoing solution, a selected candidate device needs to meet a specific condition, so that a better multi-link device can be selected, thereby improving communication quality.

In a possible implementation method, the first device sends notification information to the second device, where the notification information includes identification information of the third device and/or identification information of a link supported by the third device, the third device supports an MLO function, and the notification information indicates to use the third device as an access point multi-link device.

In the foregoing solution, the first device selects the third device as a secondary access point multi-link device, so that the secondary access point multi-link device can be determined more accurately.

In a possible implementation method, the first data and the second data are same data; and when the first device does not receive first acknowledgment information from the second device within first duration after sending the first data, and does not receive second acknowledgment information from the third device within second duration after sending the second data, the first device retransmits the first data on the first link set, and retransmits the second data on the second link set, where the first acknowledgment information indicates that the first data is received, and the second acknowledgment information indicates that the second data is received.

In the foregoing solution, data transmission reliability can be improved by using a data retransmission mechanism.

In a possible implementation method, the first device receives third data from the second device by using the first link set; and the first device receives fourth data from the third device by using the second link set, where the fourth data is sent by the second device to the third device by using the third link set.

In a possible implementation method, the third data is the same as the fourth data; and the first device performs deduplication on the third data and the fourth data.

According to a second aspect, an embodiment of this application provides a communication method. The method may be performed by a second device or a module (for example, a chip) used in the second device. That the second device performs the method is used as an example. The second device establishes a multi-link connection to a first device by using a first link set, and establishes at least one link connection to a third device by using a third link set; the second device receives first data from the first device by using the first link set; and the second device receives second data from the third device by using the third link set, where the second data is sent by the first device to the third device by using a second link set; and the first device is a non-access point multi-link device, the second device is an access point multi-link device, and the third device is an access point multi-link device or an access point device.

In the foregoing solution, a manner of cooperative communication between a plurality of access point devices is constructed. To be specific, one non-access point multi-link device may be connected to two or more access point devices (for example, connected to two access point multi-link devices, or connected to one access point multi-link device and one access point device) simultaneously. Therefore, the plurality of access point devices may provide, in same time, network services for the non-access point multi-link device simultaneously, so that communication reliability and a communication throughput can be improved.

In a possible implementation method, the second device receives identification information of at least one candidate device from the first device, where the at least one candidate device supports a multi-link operation MLO function; and the second device sends notification information to the first device, where the notification information includes identification information of the third device, the third device is included in the at least one candidate device, and the notification information indicates to use the third device as a secondary access point multi-link device.

In the foregoing solution, the second device selects the third device from the at least one candidate device as the secondary access point multi-link device, so that the secondary access point multi-link device can be determined more accurately.

In a possible implementation method, the at least one candidate device meets one or more of the following conditions:
signal strength of the at least one candidate device is greater than signal strength of the second device;
the signal strength of the at least one candidate device is greater than a signal strength threshold;
load of the at least one candidate device is less than load of the second device; and
the load of the at least one candidate device is less than a load threshold.

In the foregoing solution, a selected candidate device needs to meet a specific condition, so that a better multi-link device can be selected, thereby improving communication quality.

In a possible implementation method, the second device receives notification information from the first device, where the notification information includes identification information of the third device and/or identification information of a link supported by the third device, the third device supports an MLO function, and the notification information indicates to use the third device as an access point multi-link device.

In the foregoing solution, the first device selects the third device as a secondary access point multi-link device, so that the secondary access point multi-link device can be determined more accurately.

In a possible implementation method, the first data and the second data are same data; and the second device performs deduplication on the first data and the second data.

In a possible implementation method, after the third device sends second acknowledgment information to the first device, the second device sends first acknowledgment information to the first device, where the first acknowledgment information indicates that the first data is received, and the second acknowledgment information indicates that the second data is received.

In the foregoing solution, a case in which the first device fails to receive acknowledgment information because the first device receives acknowledgment information for same data from the second device and the third device simultaneously can be avoided.

In a possible implementation method, when signal strength of the third device is greater than a signal strength threshold, the second device detects sending time of the second acknowledgment information; or when signal strength of the third device is less than a signal strength threshold, the second device determines sending time of the second acknowledgment information based on receiving time of the first data.

In a possible implementation method, the second device sends third data to the first device by using the first link set; and the second device sends fourth data to the third device by using the third link set, where the fourth data is sent by the third device to the first device by using the second link set.

According to a third aspect, an embodiment of this application provides a communication method. The method may be performed by a third device or a module (for example, a chip) used in the third device. That the third device performs the method is used as an example. The third device establishes at least one link connection to a first device by using a second link set, and establishes at least one link connection to a second device by using a third link set; the third device receives second data from the first device by using the second link set; and the third device sends the second data to the second device by using the third link set, where the first device is a non-access point multi-link device, the second device is an access point multi-link device, and the third device is an access point multi-link device or an access point device.

In the foregoing solution, a manner of cooperative communication between a plurality of access point devices is constructed. To be specific, one non-access point multi-link device may be connected to two or more access point devices (for example, connected to two access point multi-link devices, or connected to one access point multi-link device and one access point device) simultaneously. Therefore, the plurality of access point devices may provide, in same time, network services for the non-access point multi-link device simultaneously, so that communication reliability and a communication throughput can be improved.

In a possible implementation method, the third device receives fourth data from the second device by using the third link set; and the third device sends the fourth data to the first device by using the second link set.

According to any implementation method of the first aspect to the third aspect, possible implementations are described as follows:

In a possible implementation method, frequency bands corresponding to N links in a first link set are the same as frequency bands corresponding to N links in the second link set, and N is a positive integer.

In a possible implementation method, all links in the third link set are wired links, the third link set and the first link set have no intersection, and the third link set and the second link set have no intersection.

In a possible implementation method, all links in the third link set are wireless links, frequency bands corresponding to M links in the third link set are the same as frequency bands corresponding to M links in the first link set, and/or frequency bands corresponding to K links in the third link set are the same as frequency bands corresponding to K links in the second link set, where both M and K are positive integers.

According to a fourth aspect, an embodiment of this application provides a communication apparatus. The apparatus may be a first device, or may be a module (for example, a chip) used in the first device. The apparatus has a function of implementing any implementation method of the first aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus may be a second device, or may be a module (for example, a chip) used in the second device. The apparatus has a function of implementing any implementation method of the second aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a third device, or may be a module (for example, a chip) used in the third device. The apparatus has a function of implementing any implementation method of the third aspect. The function may be implemented by hardware, or may be implemented by hardware executing corresponding software. The hardware or the software includes one or more modules corresponding to the function.

According to a seventh aspect, an embodiment of this application provides a communication apparatus. The communication apparatus includes a processor coupled to a memory. The processor is configured to invoke a program stored in the memory, to perform any implementation method of the first aspect to the third aspect. The memory may be located inside or outside the apparatus. In addition, there may be one or more processors.

According to an eighth aspect, an embodiment of this application provides a communication apparatus. The communication apparatus includes a processor and a memory. The memory is configured to store computer instructions; and when the apparatus runs, the processor executes the computer instructions stored in the memory, the apparatus is enabled to perform any implementation method of the first aspect to the third aspect.

According to a ninth aspect, an embodiment of this application provides a communication apparatus. The communication apparatus includes units or means (means) for performing steps of any implementation method of the first aspect to the third aspect.

According to a tenth aspect, an embodiment of this application provides a communication apparatus. The communication apparatus includes a processor and an interface circuit. The processor is configured to: communicate with another apparatus through the interface circuit, and perform any implementation method of the first aspect to the third aspect. There are one or more processors.

According to an eleventh aspect, an embodiment of this application further provides a computer program product. The computer program product includes a computer program or instructions; and when the computer program or the instructions are run by a communication apparatus, any implementation method of the first aspect to the third aspect is performed.

According to a twelfth aspect, an embodiment of this application further provides a computer-readable storage medium. The computer-readable storage medium stores instructions; and when the instructions are run on a communication apparatus, any implementation method of the first aspect to the third aspect is performed.

According to a thirteenth aspect, an embodiment of this application further provides a chip system. The chip system includes a processor, configured to perform any implementation method of the first aspect to the third aspect.

According to a fourteenth aspect, an embodiment of this application further provides a communication system. The communication system includes a second device configured to perform any implementation method of the second aspect and a third device configured to perform any implementation method of the third aspect.

In a possible implementation method, the communication system further includes a first device configured to perform any implementation method of the first aspect.

### BRIEF DESCRIPTION OF DRAWINGS

FIG. 1 is an example diagram of a multi-link device;
FIG. 2 is a diagram of a communication system according to an embodiment of this application;
FIG. 3 is a schematic flowchart of a communication method according to an embodiment of this application;
FIG. 4 is an example diagram of communication changes between a non-AP MLD and AP MLDs;
FIG. 5 is a diagram of a structure of cooperative communication between a plurality of AP MLDs according to an embodiment of this application;
FIG. 6 is a diagram of a structure of a communication apparatus according to an embodiment of this application;
FIG. 7 is a diagram of a structure of a communication apparatus according to an embodiment of this application;
FIG. 8 is a diagram of cooperative communication between a plurality of AP MLDs according to an embodiment of this application; and
FIG. 9 is a diagram of cooperative communication between a plurality of AP MLDs according to an embodiment of this application.

### DESCRIPTION OF EMBODIMENTS

To achieve objective of efficient operation of a plurality of frequency bands (for example, 2.4 gigahertz (gigahertz, GHz), 5 GHz, or 6 GHz), in this application, multi-link operation (multi-link operation, MLO) is proposed, to achieve load balancing, multi-band aggregation, and synchronous downlink/uplink transmission. A multi-link device (multi-link device, MLD) is a logical entity that supports an MLO function. The multi-link device supports using a plurality of frequency bands for performing uplink/downlink data transmission simultaneously. Different frequency bands correspond to different links.

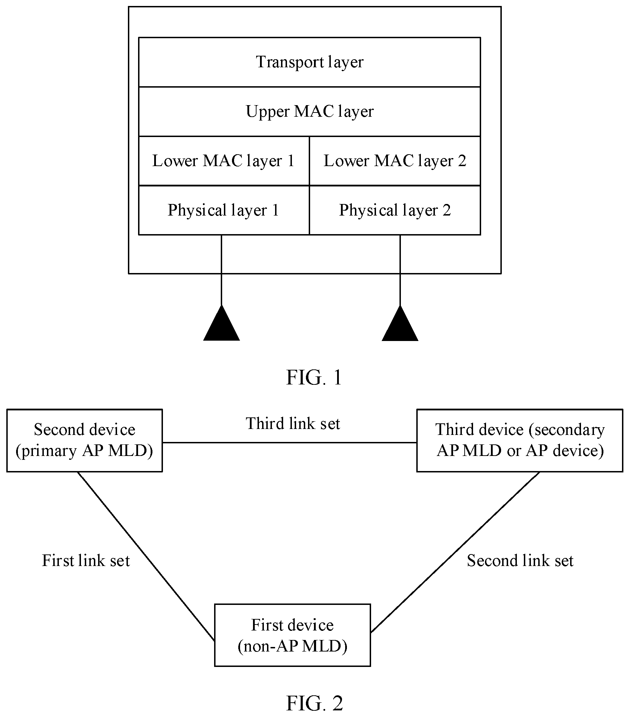

FIG. 1 is an example diagram of a multi-link device. In this example, the multi-link device supports two links for performing data transmission, where the first link corresponds to a physical layer 1, a lower media access control (lower media access control, LMAC) layer 1, an upper MAC (upper MAC, UMAC) layer, and a transport layer, and the second link corresponds to a physical layer 2, a lower MAC layer 2, the upper MAC layer, and the transport layer. The physical layers of the two links are different, and the lower MAC layers of the two links are also different, but of the two links correspond to the same upper MAC layer and the same transport layer. For example, the first link corresponds to 2.4 GHz, and the second link corresponds to 5 GHz. Alternatively, the first link corresponds to 2.4 GHz, and the second link corresponds to 6 GHz. Alternatively, the first link corresponds to 5 GHz, and the second link corresponds to 6 GHz. Other examples are not enumerated.

The multi-link device in embodiments of this application may be an access point (access point, AP) device, a terminal device, or the like.

The access point device is a wireless hub (HUB) for a wireless network, and is an access point for a terminal device to access a wired Ethernet backbone network. The access point device can be easily installed on a ceiling or wall to provide wide signal coverage in open space.

The terminal device is a device having a wireless transceiver function. The terminal device may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may be deployed on land, including an indoor or outdoor device. During specific application, the terminal device may be a cellular phone, a mobile phone (mobile phone), a tablet computer (pad), a wearable device, a smart point of sale (point of sale, POS) machine, a customer-premises equipment (customer-premises equipment, CPE), a computer having a wireless transceiver function, a virtual reality (virtual reality, VR) terminal, an augmented reality (augmented reality, AR) terminal, a terminal device in industrial control (industrial control), a terminal device in self driving (self driving), a terminal device in remote medical (remote medical), a terminal device in a smart grid (smart grid), a terminal device in a smart city (smart city), a terminal device in a smart home (smart home), or the like.

In embodiments of this application, when the multi-link device is an AP, that is, the AP has an MLO function, the AP is also referred to as an AP MLD. When the multi-link device is a terminal device, that is, the terminal device has an MLO function, the terminal device is also referred to as a non-AP MLD (non-AP MLD) or a station (station, STA).

FIG. 2 is a diagram of a communication system according to an embodiment of this application. The communication system includes a second device and a third device. Optionally, the system further includes a first device. The first device is also referred to as a non-access point multi-link device (non-AP MLD), the second device is also referred to as a primary access point multi-link device (primary AP MLD), and the third device may be a secondary access point multi-link device (secondary AP MLD) or an access point device (AP device).

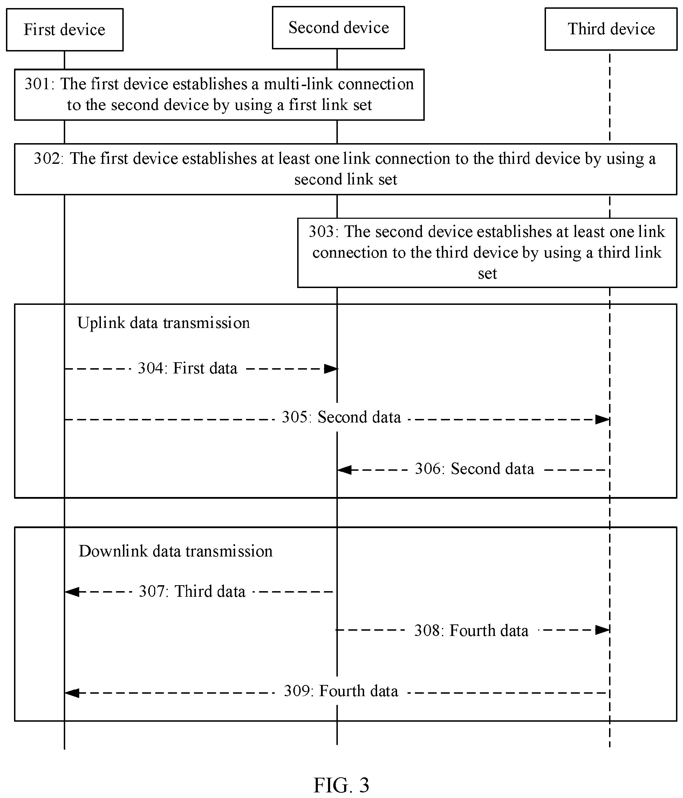

FIG. 3 is a schematic flowchart of a communication method according to an embodiment of this application. The method includes the following steps.

Step 301: A first device establishes a multi-link connection to a second device by using a first link set.

After detecting the second device, the first device establishes the multi-link connection after performing capability negotiation with the second device by using a specific link such as a link corresponding to 2.4 GHz, and a plurality of links corresponding to the multi-link connection form the first link set. Therefore, the first link set includes a plurality of links, and each of the plurality of links corresponds to one frequency band. For example, the first link set includes a 2.4 GHz link, a 5 GHz frequency band link, and a 6 GHz link.

After the first device establishes the multi-link connection to the second device, the first device and the second device may communicate through the plurality of links simultaneously.

To implement cooperation between a plurality of AP MLDs and provide a communication service with high reliability and a high throughput for a non-AP MLD, after the multi-link connection is established between the first device and the second device, a third device may be added for cooperative communication. The third device is configured to: receive uplink data from the first device and forward the uplink data to the second device, and receive downlink data from the second device and forward the downlink data to the first device. It should be noted that a quantity of third devices is not limited in this application, that is, one or more third devices may be selected for cooperative communication.

When the third device is selected for cooperative communication, the second device may be referred to as a primary AP MLD, and the third device may be referred to as a secondary AP MLD.

The following describes a specific implementation method for selecting the third device for cooperative communication.

The first device discovers one or more access point devices by scanning a service set identifier (service set identifier, SSID) of the first device. An SSID of the one or more access point devices is the same as the SSID of the first device, that is, the one or more access point devices and the first device belong to a same network. Then, the first device determines, from the one or more access point devices, at least one candidate device that supports an MLO function. For example, the first device may detect beacon information periodically sent by the one or more access point devices. The beacon information includes capability information for indicating whether the access point device supports the MLO function, and further includes identification information of a link supported by the access point device. For another example, the first device may alternatively actively send a query request to the one or more access point devices. The query request is for requesting to query whether the access point device supports the MLO function, and query identification information of a link supported by the access point device.

After determining the at least one candidate device, the first device may send, to the second device, identification information of the at least one candidate device and/or identification information of a link supported by the at least one candidate device. The second device selects the third device from the at least one candidate device, and then the second device negotiates with the third device to determine that the second device is used as a primary AP MLD and the third device is used as a secondary AP MLD. Then, the second device sends notification information to the first device, where the notification information includes one or more of identification information of the third device (for example, may be an MLD MAC address), identification information of a link supported by the third device (for example, may be a basic service set identifier (basic service set identifier, BSSID)), and a link bandwidth of the link supported by the third device, and the notification information indicates to use the third device as a secondary access point multi-link device. It should be noted that, in this application, the third device may alternatively be used as a primary AP MLD, and the second device may alternatively be used as a secondary AP MLD. For ease of description, in this application, an example in which the second device is used as the primary AP MLD, and the third device is used as the secondary AP MLD is used for description. Optionally, if there is no link between the first device and the second device or there are different links between the first device and the second device, the first device sends, to the second device through a fourth device, the identification information of the at least one candidate device and/or the identification information of the link supported by the at least one candidate device, and the second device sends the notification information to the first device through the fourth device, or the third device sends the notification information to the first device. The fourth device is a secondary AP MLD that has completed link establishment.

Alternatively, after the first device determines the at least one candidate device, the first device selects the third device from the at least one candidate device, and then the first device sends the notification information to the second device, where the notification information includes identification information of the third device and/or identification information of a link supported by the third device, and the notification information indicates to use the third device as an access point multi-link device. Then, the second device negotiates with the third device to determine that the second device is used as a primary AP MLD and the third device is used as a secondary AP MLD. It should be noted that, in this application, the third device may alternatively be used as a primary AP MLD, and the second device may alternatively be used as a secondary AP MLD. For ease of description, in this application, an example in which the second device is used as the primary AP MLD, and the third device is used as the secondary AP MLD is used for description. Optionally, if there is no link between the first device and the second device or there are different links between the first device and the second device, the first device sends the notification information to the second device through a fourth device. The fourth device is a secondary AP MLD that has completed link establishment.

In an implementation method, the at least one candidate device further meets one or more of the following conditions:
(1) signal strength of the at least one candidate device is greater than signal strength of the second device;
(2) the signal strength of the at least one candidate device is greater than a signal strength threshold;
(3) load of the at least one candidate device is less than load of the second device; and
(4) the load of the at least one candidate device is less than a load threshold.

In an implementation method, the third device is a device with highest signal strength and/or lightest load in the at least one candidate device.

Step 302: The first device establishes at least one link connection to the third device by using a second link set.

After the first device and the second device determine to use the third device for cooperative communication, the first device establishes a link connection to the second device, and a set formed by an established link is referred to as the second link set.

The second link set includes one or more links, and each of the one or more links corresponds to one frequency band. For example, the second link set includes a link corresponding to 5 GHz and a link corresponding to 6 GHz. After the first device establishes a multi-link connection to the third device, the first device and the third device may communicate with each other through a plurality of links simultaneously.

In an implementation method, a frequency band corresponding to a link in the second link set and a frequency band corresponding to a link in the first link set have no intersection. For example, frequency bands corresponding to a plurality of links in the first link set include 2.4 GHz and 5 GHz, and the first device choose to use 6 GHz, searches for an AP MLD other than the second device by using the foregoing described method, reports information about the third device to the second device through a link corresponding to 6 GHz, and finally determines the third device as a secondary AP MLD. In addition, the first device may establish a link to the second device by using 6 GHz. In this way, the second link set includes the link corresponding to 6 GHz. In this case, the frequency band corresponding to the link in the second link set is 6 GHz, and the frequency bands corresponding to the links in the first link set include 2.4 GHz and 5 GHz.

In another implementation method, frequency bands corresponding to N links in the first link set are the same as frequency bands corresponding to N links in the second link set, and N is a positive integer. For example, frequency bands corresponding to links in the first link set include 2.4 GHz, 5 GHz, and 6 GHz. When the first device and the second device are sending or receiving data by using the first link set, and the first device needs to use the 6 GHz link to search for an AP MLD other than the second device, the first device may idle the link corresponding to the 6 GHz in the first link set, to search for the AP MLD, and the first device reports information about the third device to the second device through the link corresponding to the 6 GHz frequency band. After the second device receives the information about the third device reported by the first device, a multi-AP MLD (multi-AP MLD) is established between the second device and the third device through frame exchange. Assuming that the third device also supports 2.4 GHz, 5 GHz, and 6 GHz, the third device may select a part or all of the frequency bands of 2.4 GHz, 5 GHz, and 6 GHz to establish a link to the first device. Assuming that the third device selects all 2.4 GHz, 5 GHz, and 6 GHz to establish links to the first device, the links between the first device and the third device form the second link set, and the frequency bands corresponding to the links in the second link set include 2.4 GHz, 5 GHz, and 6 GHz. In this case, the frequency bands corresponding to the links in the first link set include 2.4 GHz, 5 GHz, and 6 GHz, and the frequency bands corresponding to the links in the second link set also include 2.4 GHz, 5 GHz, and 6 GHz, which are the same.

Step 303: The second device establishes at least one link connection to the third device by using a third link set.

A link established between the second device and the third device is also referred to as a backhaul link.

A set formed by one or more links established between the second device and the third device is referred to as the third link set. Because both the second device and the third device are AP MLDs, a wired link (for example, an optical fiber or a power line) or a wireless link may be established between the second device and the third device, that is, all links in the third link set are wired links or wireless links. The wired link may be implemented based on a fiber to the room (fiber to the room, FTTR) technology.

In an implementation method, when all links in the third link set are wired links, the third link set and the first link set have no intersection, and the third link set and the second link set have no intersection. Optionally, because the wired link is with high stability and high reliability, the primary AP MLD may not need to be handed over in a transmission process. That is, after the first device moves, even if the first device is far away from the second device, the second device is always used as the primary AP MLD, and another AP MLD that is close to the first device is not handed over to the primary AP MLD.

In another implementation method, when all links in the third link set are wireless links, frequency bands corresponding to M links in the third link set are the same as frequency bands corresponding to M links in the first link set, and/or frequency bands corresponding to K links in the third link set are the same as frequency bands corresponding to K links in the second link set, where both M and K are positive integers. Optionally, when all the links in the third link set are wireless links, if quality of the link in the first link set decreases to a value below a threshold, the first device is allowed to hand over the primary AP MLD through negotiation, for example, hand over the third device to the primary AP MLD or hand over an AP MLD other than the second device and the third device to the primary AP MLD.

Through step 301 to step 303 above, a communication manner of cooperative communication between a plurality of AP MLDs may be constructed. To be specific, one non-AP MLD may be connected to two or more AP devices (for example, connected to two AP MLDs, or connected to one AP MLD and one AP device) simultaneously. Therefore, a plurality of AP devices may provide, in same time, network services for the non-AP MLD simultaneously, so that communication reliability and a communication throughput can be improved.

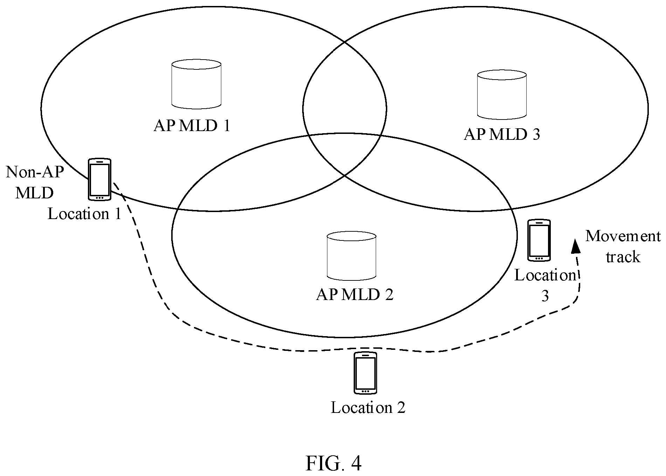

It should be noted that, because the non-AP MLD may move, the AP device that provides the network service for the non-AP MLD may change. FIG. 4 is an example diagram of communication changes between a non-AP MLD and AP MLDs. In this example, the non-AP MLD is located at a location 1 in time t1, and an AP MLD 1 and an AP MLD 2 may cooperate to provide a network service for the non-AP MLD, where the AP MLD 1 is a primary AP MLD, and the AP MLD 2 is a secondary AP MLD. The non-AP MLD moves and is located at location 2 in time t2, and only the AP MLD 2 can provide a network service for the non-AP MLD. The non-AP MLD is located at a location 3 in time t3, and the AP MLD 2 and an AP MLD 3 may cooperate to provide a network service for the non-AP MLD, where the AP MLD 2 is a primary AP MLD, and the AP MLD 3 is a secondary AP MLD.

The following describes processes of uplink data transmission and downlink data transmission based on the foregoing communication system.

The process of uplink data transmission is described in step 304 to step 306 below.

Step 304: The first device sends first data to the second device by using the first link set.

Step 305: The first device sends second data to the third device by using the second link set.

Step 306: The third device sends the second data to the second device by using the third link set.

In the foregoing method, the first device may send uplink data to the second device through the link between the first device and the second device, and the first device sends uplink data to the second device through forwarding by the third device. That is, the third device is used as a secondary AP MLD, and needs to forward the uplink data to the second device after receiving the uplink data. Because the first device may send the uplink data through two or more AP MLDs, if different data is sent, a transmission throughput can be improved, that is, transmission efficiency can be improved by using transmit diversity; or if same data is sent, transmission reliability can be improved. In addition, because the third device only transparently transmits the uplink data, the first device encrypts the uplink data and then sends the encrypted uplink data to the third device, and the third device does not need to decrypt the encrypted uplink data, but only needs to transparently transmit the encrypted uplink data to the second device, so that the third device does not need to obtain an encryption key. This avoids a security risk caused by sharing a key between a plurality of AP MLDs.

In an implementation method, if the first data and the second data are different data, after receiving the first data and the second data, the second device may perform processing such as uniform sorting or decryption on the first data and the second data, and then continue to forward the processed data to another device.

In an implementation method, the second device and the third device share a key. The second device and the third device may independently encrypt and decrypt the data. During uplink data transmission, the second device and the third device separately decrypt the uplink data sent by the first device. For example, the first device encrypts the uplink data, and then sends the encrypted uplink data to the second device and the third device. The second device may decrypt the uplink data, and the third device may also decrypt the uplink data, and transmit the decrypted uplink data to the second device, to improve data trans mission efficiency. During downlink data transmission, the first device and the third device separately decrypt downlink data sent by the second device. For example, the second device encrypts the downlink data, and then sends the encrypted downlink data to the first device and the third device. The first device decrypts the downlink data, and the third device decrypts the downlink data, and transmits the decrypted downlink data to the first device, to improve data transmission efficiency.

In an implementation method, if the first data and the second data are different data, after receiving the first data and the second data, the second device may perform processing such as uniform sorting on the first data and the second data, and then continue to forward the processed data to another device.

In another implementation method, if the first data and the second data are same data, after receiving the first data and the second data, the second device needs to perform deduplication on the first data and the second data.

In an implementation method, if the first data and the second data are same data, the third device sends second acknowledgment information to the first device after receiving the second data, where the second acknowledgment information indicates that the second data is received. After the third device sends the second acknowledgment information to the first device, the second device sends first acknowledgment information to the first device, where the first acknowledgment information indicates that the first data is received. The second device may determine, according to the following method, whether the third device has sent the acknowledgment information to the first device:
Case 1: When signal strength of the third device is greater than a signal strength threshold, the second device detects sending time of the second acknowledgment information. That is, if the signal strength of the third device is high, when the third device sends the second acknowledgment information, the second device can detect the second acknowledgment information.
Case 2: When signal strength of the third device is less than a signal strength threshold, the second device determines sending time of the second acknowledgment information based on receiving time of the first data. That is, if signal strength of the third device is low, when the third device sends the second acknowledgment information, the second device cannot detect the second acknowledgment information. Therefore, the second device needs to determine the sending time of the second acknowledgment information by using another method. Specifically, the second device estimates, based on time in which the second device receives the first data, time in which the third device receives the second data, and determines, based on the time in which the third device receives the second data, the time in which the third device sends the second acknowledgment information.

In the foregoing method, the second device sends the first acknowledgment information after the third device sends the second acknowledgment information, so that a conflict of the acknowledgment information can be avoided. In other words, the first device sends same uplink data to the second device and the third device, and needs to separately receive acknowledgment information from the second device and acknowledgment information from the third device in different time, to avoid a conflict of the acknowledgment information, which consequently causes a failure that the acknowledgment information cannot be normally received.

Because the second acknowledgment information is sent first, and the first acknowledgment information is sent later, the second acknowledgment information is also referred to as data block acknowledgment information (block ack, BA), and the first acknowledgment information is also referred to as delay data block acknowledgment information (delay block ack, delay BA).

In an implementation method, if the first data and the second data are same data, when the first device does not receive the first acknowledgment information from the second device within first duration after sending the first data, and does not receive the second acknowledgment information from the third device within second duration after sending the second data, it indicates that the data may not be correctly received by the second device. Therefore, the first device retransmits the first data on the first link set, and retransmits the second data on the second link set.

The following describes this embodiment by using an example with reference to step 304 to step 306.

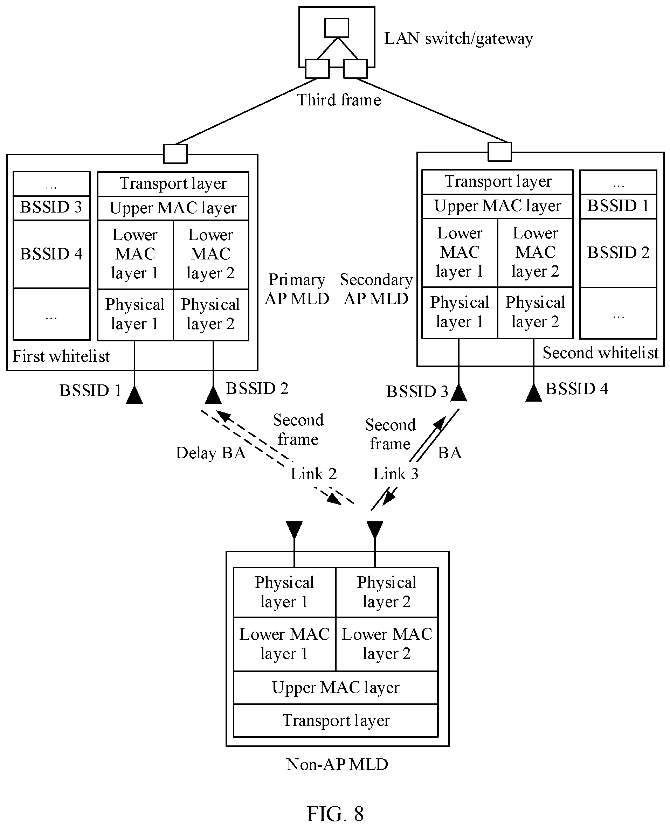

FIG. 8 is a diagram of cooperative communication between a plurality of AP MLDs according to an embodiment of this application.

The second device establishes a first whitelist, and the third device establishes a second whitelist. The first whitelist and the second whitelist are for indicating link identifiers of the plurality of AP MLDs.

In an implementation method, the first whitelist includes a basic service set identifier BSSID of one or more links in the plurality of AP MLDs. For example, the first whitelist includes a BSSID 3 and a BSSID 4, and the second whitelist includes a BSSID 1 and a BSSID 2.

In an implementation method, the first whitelist includes a link ID of the one or more links in the plurality of AP MLDs.

The first device may send a second frame to the third device through a link 3 between the first device and the third device, where the second frame is for transmitting uplink data, the second frame includes a second field, and the second field is for identifying the link 3. After the third device receives the second frame, the third device sends second acknowledgment information to the first device, where the second acknowledgment information indicates that the second frame is received. The first device may be a non-AP MLD.

The third device sends a third frame to the second device by using a third link set, where data included in the third frame is data that is included in the second frame and that has been correctly received (or demodulated) by the third device.

The second device receives the second frame through a link 2 between the first device and the second device. The second frame includes the second field. When the link identified by the second field belongs to the first whitelist, the second device sends first acknowledgment information to the first device, where the first acknowledgment information indicates that the second frame is received.

In an implementation method, the second field includes a basic service set identifier BSSID, for identifying a link between the first device and the third device.

In an implementation method, the second field includes a link ID, for identifying the link between the first device and the third device, for example, the link 3.

Further, the second device and the third device may belong to a same MLD. For example, the second device and the third device have a same MLD MAC address.

In the foregoing method, the second device may determine, according to the following method, whether the third device has sent the acknowledgment information to the first device.

Case 1: When signal strength of the third device is greater than a signal strength threshold, the second device detects sending time of the second acknowledgment information. That is, if the signal strength of the third device is high, when the third device sends the second acknowledgment information, the second device can detect the second acknowledgment information.

Case 2: When signal strength of the third device is less than a signal strength threshold, the second device determines sending time of the second acknowledgment information based on receiving time of the second frame. That is, if the signal strength of the third device is low, when the third device sends the second acknowledgment information, the second device cannot detect the second acknowledgment information. Therefore, the second device needs to determine the sending time of the second acknowledgment information by using another method. Specifically, the second device estimates, based on the time in which the second device receives the second frame, time in which the third device receives the second frame, and determines, based on the time in which the third device receives the second frame, the time in which the third device sends the second acknowledgment information.

In the foregoing method, the second device sends the first acknowledgment information after the third device sends the second acknowledgment information, so that a conflict of the acknowledgment information can be avoided. For example, the first device sends same uplink data, namely, the second frame, to the second device and the third device, and needs to separately receive the acknowledgment information from the second device and the acknowledgment information from the third device in different time, to avoid a conflict of the acknowledgment information, which consequently causes a failure that the acknowledgment information cannot be normally received.

Because the second acknowledgment information is sent first, and the first acknowledgment information is sent later, the second acknowledgment information is also referred to as data block acknowledgment information (block ack, BA), and the first acknowledgment information is also referred to as delay data block acknowledgment information (delay block ack, delay BA).

In an implementation method, when the first device does not receive the second acknowledgment information from the third device within second duration after sending the second frame, and does not receive the first acknowledgment information from the second device within first duration after sending the second frame, it indicates that the uplink data may not be correctly received by the second device and the third device. Therefore, the first device retransmits the second frame on a second link set.

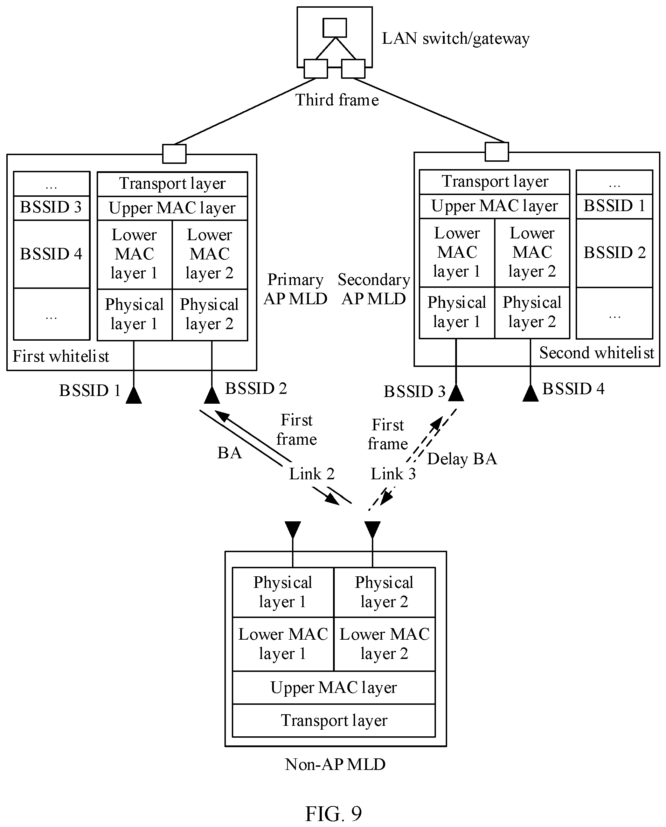

FIG. 9 is a diagram of cooperative communication between a plurality of AP MLDs according to an embodiment of this application.

The second device establishes a first whitelist, and the third device establishes a second whitelist. The first whitelist and the second whitelist are for indicating link identifiers of the plurality of AP MLDs. The second device may be a primary AP MLD, and the third device may be a secondary AP MLD.

In an implementation method, the first whitelist includes a basic service set identifier BSSID of one or more links in the plurality of AP MLDs. For example, the first whitelist includes a BSSID 3 and a BSSID 4, and the second whitelist includes a BSSID 1 and a BSSID 2.

In an implementation method, the first whitelist includes a link ID of the one or more links in the plurality of AP MLDs.

The first device may send a first frame to the second device through a link 2 between the first device and the second device, where the first frame is for transmitting uplink data, the first frame includes a first field, and the first field is for identifying the link 2. After the second device receives the first frame, the second device sends first acknowledgment information to the first device, where the first acknowledgment information indicates that the first frame is received. The first device may be a non-AP MLD.

The third device receives the first frame through a link 3 between the first device and the third device. The first frame includes the first field. When the link identified by the first field belongs to the second whitelist, the third device sends second acknowledgment information to the first device, where the second acknowledgment information indicates that the first frame is received.

The third device sends a third frame to the second device by using a third link set, where data included in the third frame is data that is included in the first frame and that has been correctly received (or demodulated) by the third device.

In an implementation method, the first field includes a basic service set identifier BSSID, for identifying a link between the first device and the second device.

In an implementation method, the first field includes a link ID, for identifying the link between the first device and the second device, for example, the link 2.

The second device and the third device belong to a same MLD. For example, the second device and the third device have a same MLD MAC address.

In the foregoing method, the third device may determine, according to the following method, whether the second device has sent the acknowledgment information to the first device.

Case 1: When signal strength of the second device is greater than a signal strength threshold, the third device detects sending time of the first acknowledgment information. That is, if the signal strength of the second device is high, when the second device sends the first acknowledgment information, the third device can detect the first acknowledgment information.

Case 2: When signal strength of the second device is less than a signal strength threshold, the third device determines sending time of the first acknowledgment information based on receiving time of the first frame. That is, if the signal strength of the second device is low, when the second device sends the first acknowledgment information, the third device cannot detect the first acknowledgment information. Therefore, the third device needs to determine the sending time of the first acknowledgment information by using another method. Specifically, the third device estimates, based on the time in which the third device receives the first frame, time in which the second device receives the first frame, and determines, based on the time in which the second device receives the first frame, the time in which the second device sends the first acknowledgment information.

In the foregoing method, the third device sends the second acknowledgment information after the second device sends the first acknowledgment information, so that a conflict of the acknowledgment information can be avoided. For example, the first device sends same uplink data, namely, the first frame, to the second device and the third device, and needs to separately receive the acknowledgment information from the second device and the acknowledgment information from the third device in different time, to avoid a conflict of the acknowledgment information, which consequently causes a failure that the acknowledgment information cannot be normally received.

Because the first acknowledgment information is sent first, and the second acknowledgment information is sent later, the first acknowledgment information is also referred to as data block acknowledgment information (block ack, BA), and the second acknowledgment information is also referred to as delay data block acknowledgment information (delay block ack, delay BA).

In an implementation method, when the first device does not receive the first acknowledgment information from the second device within second duration after sending the first frame, and does not receive the second acknowledgment information from the third device within first duration after sending the first frame, it indicates that the uplink data may not be correctly received by the second device and the third device. Therefore, the first device may retransmit the first frame on a first link set. The second duration (corresponding to the BA) is less than the first duration.

The process of downlink data transmission is described in step 307 to step 309 below.

Step 307: The second device sends third data to the first device by using the first link set.

Step 308: The second device sends fourth data to the third device by using the third link set.

Step 309: The third device sends the fourth data to the first device by using the second link set.

In the foregoing method, the second device may send downlink data to the first device through the link between the first device and the second device, and the second device sends the downlink data to the first device through forwarding by the third device. That is, the third device is used as a secondary AP MLD, and needs to forward the downlink data to the first device after receiving the downlink data. Because the first device may receive the downlink data through two or more AP MLDs, if different data is received, a transmission throughput can be improved, that is, transmission efficiency can be improved by using receive diversity; or if same data is received, transmission reliability can be improved. In addition, because the third device only transparently transmits the downlink data, the second device encrypts the downlink data and then sends the encrypted downlink data to the third device, and the third device does not need to decrypt the encrypted downlink data, but only needs to transparently transmit the encrypted downlink data to the first device, so that the third device does not need to obtain an encryption key. This avoids a security risk caused by sharing a key between a plurality of AP MLDs.

In an implementation method, if the third data and the fourth data are different data, after receiving the third data and the fourth data, the first device may perform processing such as uniform sorting or decryption on the third data and the fourth data.

In another implementation method, if the third data and the fourth data are same data, after receiving the third data and the fourth data, the first device needs to perform deduplication on the third data and the fourth data.

In an implementation method, if the third data and the fourth data are same data, after receiving the third data, the first device sends acknowledgment information to the second device, where the acknowledgment information is sent through the link between the first device and the second device, the acknowledgment information is further sent to the third device, and the third device forwards the acknowledgment information to the second device. If the third device receives the acknowledgment information before sending the fourth data to the first device, the third device may no longer send the fourth data to the first device, and the third device deletes the fourth data from a cache. In this way, time-frequency resources can be saved.

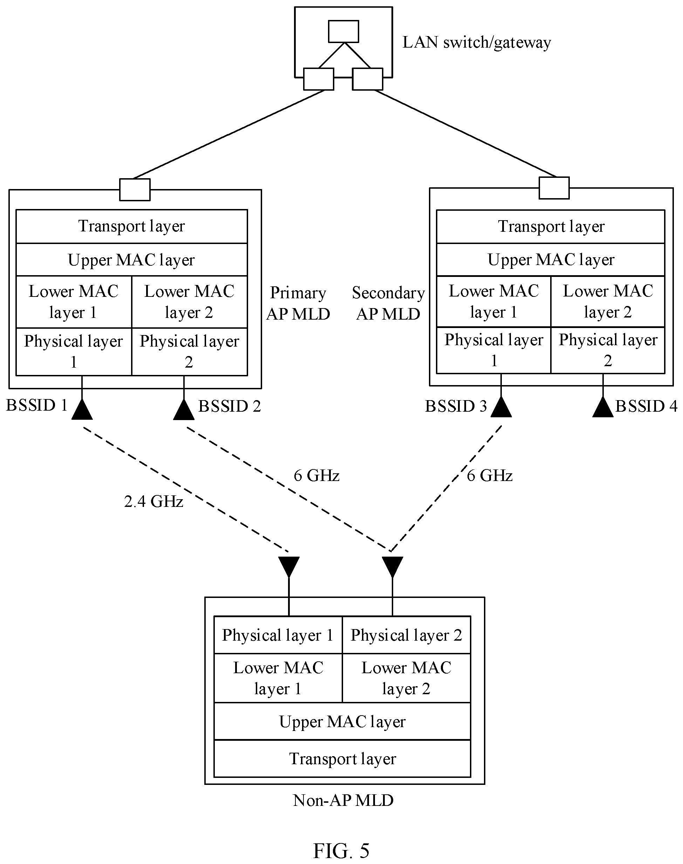

FIG. 5 is a diagram of a structure of cooperative communication between a plurality of AP MLD according to an embodiment of this application. In this example, a primary AP MLD communicates with a secondary AP MLD through a local area network (local area network, LAN) switch/gateway. The first link set between the non-AP MLD and the primary AP MLD includes a link corresponding to 2.4 GHz and a link corresponding to 6 GHz, and the second link set between the non-AP MLD and the secondary AP MLD includes a link corresponding to 6 GHz.

It may be understood that, to implement the functions in the foregoing embodiments, the first device, the second device, or the third device includes corresponding hardware structures and/or software modules for performing the functions. A person skilled in the art should be easily aware that, with reference to units and method steps in examples described in embodiments disclosed in this application, this application can be implemented by hardware or a combination of hardware and computer software. Whether a function is performed by hardware or hardware driven by computer software depends on particular application scenarios and design constraint conditions of the technical solutions.

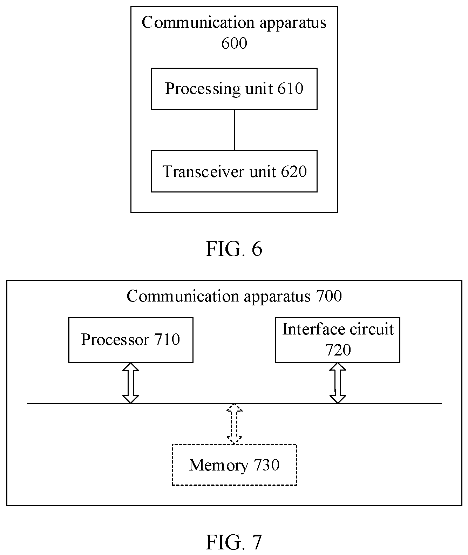

FIG. 6 and FIG. 7 each are a diagram of a structure of a possible communication apparatus according to an embodiment of this application. These communication apparatuses may be configured to implement functions of the first device, the second device, or the third device in the foregoing method embodiments, and therefore can also implement beneficial effects of the foregoing method embodiments. In this embodiment of this application, the communication apparatus may be the first device, the second device, or the third device shown in FIG. 2, or may be a module (for example, a chip) used in the first device, the second device, or the third device.

The communication apparatus 600 shown in FIG. 6 includes a processing unit 610 and a transceiver unit 620. The communication apparatus 600 is configured to implement functions of the first device, the second device, or the third device in the foregoing method embodiments.

When the communication apparatus 600 is configured to implement the functions of the first device in the foregoing method embodiments, the processing unit 610 is configured to establish a multi-link connection to a second device by using a first link set, and establish at least one link connection to a third device by using a second link set; and the transceiver unit 620 is configured to: send first data to the second device by using the first link set; and send second data to the third device by using the second link set, where the second data is forwarded by the third device to the second device by using a third link set; and the first device is a non-access point multi-link device, the second device is an access point multi-link device, and the third device is an access point multi-link device or an access point device.

In a possible implementation method, the transceiver unit 620 is further configured to: send identification information of at least one candidate device to the second device, where the at least one candidate device supports a multi-link operation MLO function; and receive notification information from the second device, where the notification information includes identification information of the third device, the third device is included in the at least one candidate device, and the notification information indicates to use the third device as a secondary access point multi-link device.

In a possible implementation method, the transceiver unit 620 is further configured to send notification information to the second device, where the notification information includes identification information of the third device and/or identification information of a link supported by the third device, the third device supports an MLO function, and the notification information indicates to use the third device as an access point multi-link device.

In a possible implementation method, the first data and the second data are same data; and the transceiver unit 620 is further configured to: when not receiving first acknowledgment information from the second device within first duration after sending the first data, and not receiving second acknowledgment information from the third device within second duration after sending the second data, retransmit the first data on the first link set, and retransmit the second data on the second link set, where the first acknowledgment information indicates that the first data is received, and the second acknowledgment information indicates that the second data is received.

In a possible implementation method, the transceiver unit 620 is further configured to: receive third data from the second device by using the first link set; and receive fourth data from the third device by using the second link set, where the fourth data is sent by the second device to the third device by using the third link set.

In a possible implementation method, the third data is the same as the fourth data; and the processing unit 610 is further configured to perform deduplication on the third data and the fourth data.

When the communication apparatus 600 is configured to implement the functions of the second device in the foregoing method embodiments, the processing unit 610 is configured to establish a multi-link connection to a first device by using a first link set, and establish at least one link connection to a third device by using a third link set; and the transceiver unit 620 is configured to: receive first data from the first device by using the first link set; and receive second data from the third device by using the third link set, where the second data is sent by the first device to the third device by using a second link set; and the first device is a non-access point multi-link device, the second device is an access point multi-link device, and the third device is an access point multi-link device or an access point device.

In a possible implementation method, the transceiver unit 620 is further configured to: receive identification information of at least one candidate device from the first device, where the at least one candidate device supports a multi-link operation MLO function; and send notification information to the first device, where the notification information includes identification information of the third device, the third device is included in the at least one candidate device, and the notification information indicates to use the third device as a secondary access point multi-link device.

In a possible implementation method, the transceiver unit 620 is further configured to receive notification information from the first device, where the notification information includes identification information of the third device and/or identification information of a link supported by the third device, the third device supports an MLO function, and the notification information indicates to use the third device as an access point multi-link device.

In a possible implementation method, the first data and the second data are same data; and the processing unit 610 is further configured to perform deduplication on the first data and the second data.

In a possible implementation method, the transceiver unit 620 is further configured to: after the third device sends second acknowledgment information to the first device, send first acknowledgment information to the first device, where the first acknowledgment information indicates that the first data is received, and the second acknowledgment information indicates that the second data is received.

In a possible implementation method, the processing unit 610 is further configured to: when signal strength of the third device is greater than a signal strength threshold, detect sending time of the second acknowledgment information; or when signal strength of the third device is less than a signal strength threshold, determine sending time of the second acknowledgment information based on receiving time of the first data.

In a possible implementation method, the transceiver unit 620 is further configured to: send third data to the first device by using the first link set; and send fourth data to the third device by using the third link set, where the fourth data is sent by the third device to the first device by using the second link set.

When the communication apparatus 600 is configured to implement the functions of the third device in the foregoing method embodiments, the processing unit 610 is configured to establish at least one link connection to a first device by using a second link set, and establish at least one link connection to a second device by using a third link set; and the transceiver unit 620 is configured to: receive second data from the first device by using the second link set; and send the second data to the second device by using the third link set, where the first device is a non-access point multi-link device, the second device is an access point multi-link device, and the third device is an access point multi-link device or an access point device.

In a possible implementation method, the transceiver unit 620 is further configured to: receive fourth data from the second device by using the third link set; and send the fourth data to the first device by using the second link set.

For more detailed descriptions about the processing unit 610 and the transceiver unit 620, directly refer to related descriptions in the foregoing method embodiments. Details are not described herein again.

The communication apparatus 700 shown in FIG. 7 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, input data required by the processor 710 to run the instructions, or data generated after the processor 710 runs the instructions.

When the communication apparatus 700 is configured to implement the foregoing method embodiments, the processor 710 is configured to implement functions of the processing unit 610, and the interface circuit 720 is configured to implement functions of the transceiver unit 620.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor or the like.

The method steps in embodiments of this application may be implemented in a hardware manner, or may be implemented in a manner of executing software instructions by the processor. The software instructions may include corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a first device, a second device, or a third device. Certainly, the processor and the storage medium may alternatively exist in the first device, the second device, or the third device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. The computer program (English: Computer Program) is a set of instructions that indicate each step of an electronic computer or another device having a message processing capability, and is usually written in a program design language and runs on a target architecture. When the computer programs or instructions are loaded and executed on a computer, the procedures or functions in embodiments of this application are all or partially executed. The computer may be a general-purpose computer, a dedicated computer, a computer network, an access network device, a terminal device, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
establishing, by a first device, a multi-link connection to a second device by using a first link set, and establishing at least one link connection to a third device by using a second link set;
sending, by the first device, first data to the second device by using the first link set; and
sending, by the first device, second data to the third device by using the second link set, wherein the second data is forwarded by the third device to the second device by using a third link set; and
the first device is a non-access point multi-link device, the second device is an access point multi-link device, and the third device is an access point multi-link device or an access point device.

2. The method according to claim 1, wherein frequency bands corresponding to N links in the first link set are the same as frequency bands corresponding to N links in the second link set, and N is a positive integer.

3. The method according to claim 1 or 2, wherein
all links in the third link set are wired links, the third link set and the first link set have no intersection, and the third link set and the second link set have no intersection.

4. The method according to claim 1 or 2, wherein
all links in the third link set are wireless links, frequency bands corresponding to M links in the third link set are the same as frequency bands corresponding to M links in the first link set, and/or frequency bands corresponding to K links in the third link set are the same as frequency bands corresponding to K links in the second link set, wherein both M and K are positive integers.

5. The method according to any one of claims 1 to 4, wherein the method further comprises:
sending, by the first device, identification information of at least one candidate device to the second device, wherein the at least one candidate device supports a multi-link operation MLO function; and
receiving, by the first device, notification information from the second device, wherein the notification information comprises identification information of the third device, the third device is comprised in the at least one candidate device, and the notification information indicates to use the third device as a secondary access point multi-link device.

6. The method according to claim 5, wherein the at least one candidate device meets one or more of the following conditions:
signal strength of the at least one candidate device is greater than signal strength of the second device;
the signal strength of the at least one candidate device is greater than a signal strength threshold;
load of the at least one candidate device is less than load of the second device; and
the load of the at least one candidate device is less than a load threshold.

7. The method according to any one of claims 1 to 4, wherein the method further comprises:
sending, by the first device, notification information to the second device, wherein the notification information comprises identification information of the third device and/or identification information of a link supported by the third device, the third device supports an MLO function, and the notification information indicates to use the third device as an access point multi-link device.

8. The method according to any one of claims 1 to 7, wherein the first data and the second data are same data, and the method further comprises:
when the first device does not receive first acknowledgment information from the second device within first duration after sending the first data, and does not receive second acknowledgment information from the third device within second duration after sending the second data, retransmitting, by the first device, the first data on the first link set, and retransmitting the second data on the second link set, wherein
the first acknowledgment information indicates that the first data is received, and the second acknowledgment information indicates that the second data is received.

9. The method according to any one of claims 1 to 8, wherein the method further comprises:
receiving, by the first device, third data from the second device by using the first link set; and
receiving, by the first device, fourth data from the third device by using the second link set, wherein the fourth data is sent by the second device to the third device by using the third link set.

10. The method according to claim 9, wherein the third data is the same as the fourth data, and the method further comprises:
performing, by the first device, deduplication on the third data and the fourth data.

11. A communication method, comprising:
establishing, by a second device, a multi-link connection to a first device by using a first link set, and establishing at least one link connection to a third device by using a third link set;
receiving, by the second device, first data from the first device by using the first link set; and
receiving, by the second device, second data from the third device by using the third link set, wherein the second data is sent by the first device to the third device by using a second link set; and
the first device is a non-access point multi-link device, the second device is an access point multi-link device, and the third device is an access point multi-link device or an access point device.

12. The method according to claim 11, wherein frequency bands corresponding to N links in the first link set are the same as frequency bands corresponding to N links in the second link set, and N is a positive integer.

13. The method according to claim 11 or 12, wherein
all links in the third link set are wired links, the third link set and the first link set have no intersection, and the third link set and the second link set have no intersection.

14. The method according to claim 11 or 12, wherein
all links in the third link set are wireless links, frequency bands corresponding to M links in the third link set are the same as frequency bands corresponding to M links in the first link set, and/or frequency bands corresponding to K links in the third link set are the same as frequency bands corresponding to K links in the second link set, wherein both M and K are positive integers.

15. The method according to any one of claims 11 to 14, wherein the method further comprises:
receiving, by the second device, identification information of at least one candidate device from the first device, wherein the at least one candidate device supports a multi-link operation MLO function; and
sending, by the second device, notification information to the first device, wherein the notification information comprises identification information of the third device, the third device is comprised in the at least one candidate device, and the notification information indicates to use the third device as a secondary access point multi-link device.

16. The method according to claim 15, wherein the at least one candidate device meets one or more of the following conditions:
signal strength of the at least one candidate device is greater than signal strength of the second device;
the signal strength of the at least one candidate device is greater than a signal strength threshold;
load of the at least one candidate device is less than load of the second device; and
the load of the at least one candidate device is less than a load threshold.

17. The method according to any one of claims 11 to 14, wherein the method further comprises:
receiving, by the second device, notification information from the first device, wherein the notification information comprises identification information of the third device and/or identification information of a link supported by the third device, the third device supports an MLO function, and the notification information indicates to use the third device as an access point multi-link device.

18. The method according to any one of claims 11 to 17, wherein the first data and the second data are same data, and the method further comprises:
performing, by the second device, deduplication on the first data and the second data.

19. The method according to claim 18, wherein the method further comprises:
after the third device sends second acknowledgment information to the first device, sending, by the second device, first acknowledgment information to the first device, wherein
the first acknowledgment information indicates that the first data is received, and the second acknowledgment information indicates that the second data is received.

20. The method according to claim 19, wherein the method further comprises:
when signal strength of the third device is greater than a signal strength threshold, detecting, by the second device, sending time of the second acknowledgment information; or
when signal strength of the third device is less than a signal strength threshold, determining, by the second device, sending time of the second acknowledgment information based on receiving time of the first data.

21. The method according to any one of claims 11 to 20, wherein the method further comprises:
sending, by the second device, third data to the first device by using the first link set; and
sending, by the second device, fourth data to the third device by using the third link set, wherein the fourth data is sent by the third device to the first device by using the second link set.

22. A communication method, comprising:
establishing, by a third device, at least one link connection to a first device by using a second link set, and establishing at least one link connection to a second device by using a third link set;
receiving, by the third device, second data from the first device by using the second link set; and
sending, by the third device, the second data to the second device by using the third link set, wherein
the first device is a non-access point multi-link device, the second device is an access point multi-link device, and the third device is an access point multi-link device or an access point device.

23. The method according to claim 22, wherein frequency bands corresponding to N links in a first link set are the same as frequency bands corresponding to N links in the second link set, and N is a positive integer.

24. The method according to claim 22 or 23, wherein
all links in the third link set are wired links, the third link set and the first link set have no intersection, and the third link set and the second link set have no intersection.

25. The method according to claim 22 or 23, wherein
all links in the third link set are wireless links, frequency bands corresponding to M links in the third link set are the same as frequency bands corresponding to M links in the first link set, and/or frequency bands corresponding to K links in the third link set are the same as frequency bands corresponding to K links in the second link set, wherein both M and K are positive integers.

26. The method according to any one of claims 22 to 25, wherein the method further comprises:
receiving, by the third device, fourth data from the second device by using the third link set; and
sending, by the third device, the fourth data to the first device by using the second link set.

27. A communication apparatus, comprising a processor coupled to a memory, wherein the processor is configured to invoke a program stored in the memory, to perform the method according to any one of claims 1 to 10, or perform the method according to any one of claims 11 to 21, or perform the method according to any one of claims 22 to 26.

28. A computer-readable storage medium, wherein the storage medium stores a computer program or instructions; and when the computer program or the instructions are executed by a communication apparatus, the method according to any one of claims 1 to 10 is implemented, or the method according to any one of claims 11 to 21 is implemented, or the method according to any one of claims 22 to 26 is implemented.

29. A communication system, comprising a second device configured to perform the method according to any one of claims 11 to 21, and a third device configured to perform the method according to any one of claims 22 to 26.

30. The system according to claim 29, wherein the system further comprises a first device configured to perform the method according to any one of claims 1 to 10.
